# EUROPEAN PATENT SPECIFICATION

(11) **EP 3 162 202 B1**
(45) Date of publication and mention of the grant of the patent: **15.12.2021**
(21) Application number: 16196020.8
(22) Date of filing: 27.10.2016
(51) Int. Cl.: A01M 1/14

(54) **PEST TRAP**
SCHÄDLINGSFALLE
PIÈGE À NUISIBLES

(30) Priority: 28.10.2015 GB 201519029
(43) Date of publication of application: 03.05.2017
(73) Proprietor: Pelsis Limited, Grimbald Crag Close Knaresborough North Yorkshire HG5 8PJ (GB)
(72) Inventor: Holmes, Tom, Knaresborough, North Yorkshire HG5 8PJ (GB)
(74) Representative: Appleyard Lees IP LLP

(56) References cited:
- WO-A1-2012/074795
- WO-A1-2013/052177
- WO-A1-2014/134371
- AT-U1- 5 739

## Description

This invention relates to a flying pest trap and to an immobilisation section therefore.

A flying pest trap typically comprises a housing containing an attraction section, such as an electrically powered light source that emits UV light (usually in addition to visible light), and an immobilisation section, such as a glueboard (usually a board carrying an adhesive that retains the pests when they make contact with the glueboard.

The light source is typically chosen to offer the broadest attraction to the widest range of flying pests likely to be encountered.

The flying pest trap functions by attracting flying pests, such as insects, including various types of fly and moth, to the light source. When in the vicinity of the light source the pest will explore the area and come into contact with the glueboard and thereby become immobilised. The glueboard can periodically be replaced when it becomes loaded with trapped pests. WO2014/13471A1 discloses an insect trap device including an LED light source and an adhesive surface

Efficiency and power consumption are factors that affect the cost of running a pest trap.

It is an object of the present invention to address the above mentioned issues. According to the present invention there is provided an apparatus and method as set forth in the appended claims. Other features of the invention will be apparent from the dependent claims, and the description which follows.

According to an aspect of the present invention there is provided a flying pest trap comprising an attraction section, an immobilisation section, a body section adapted to retain the attraction section and the immobilisation section, and a power section adapted to provide power to the attraction section, wherein the attraction section includes at least one light source that is adapted to emit light through at least one opening in the immobilisation section.

According to an aspect of the present invention there is provided a flying pest trap comprising an attraction section, an immobilisation section, a body section adapted to retain the attraction section and the immobilisation section, and a power section adapted to provide power to the attraction section, wherein the attraction section includes at least one light source located behind the immobilisation section.

The light sources are located behind openings in the immobilisation section.

The location behind the immobilisation is taken with respect to a front face of an immobilisation section that is presented forwards to immobilise flying pests attracted, in use, to the pest trap.

The light source may be chosen for emitting UV light as a source of attraction.

The immobilisation section includes a glueboard as a means of immobilisation.

The immobilisation section may include a carrier, which may be translucent. The carrier may be adapted to receive the glueboard, preferably in rails thereof.

The attraction section includes LED light sources, which LEDs may be carried on a printed circuit board, PCB. The carrier may be adapted to have the PCB secured thereto. The PCB may be attachable to a rear of the carrier. The LEDs may, in use, transmit light through the carrier. The carrier may be receivable in a part of the immobilisation section, preferably in rails thereof.

The attraction section may include at least one light source located forwards of the immobilisation section; said light source may be a fluorescent tube-type light source. The invention extends to an immobilisation section of a pest trap incorporating openings arranged to allow light from a light source to pass through said openings.

For a better understanding of the invention and to show how the same may be brought into effect, embodiments of the same will now be described with reference to the accompanying drawings, in which:
Figure 1 is a schematic front view of a prior art flying pest trap;
Figure 2 is a schematic plan view of a glueboard of a flying pest trap with a prior art peripheral arrangement of LED light sources;
Figure 3 is a schematic plan view of a glueboard of a flying pest trap according to an embodiment of the invention with an array of LED light sources located in openings in the glueboard;
Figure 4 is a schematic front view of a flying pest trap according to an embodiment of the invention incorporating the glueboard of Figure 3;
Figure 5 is a schematic perspective view of a flying pest trap according to an embodiment of the invention incorporating the glueboard of Figure 3 and an array of fluorescent light sources;
Figure 6 is a schematic exploded perspective view of an LED glueboard cassette for use in the flying pest trap of Figures 4 and/or 5;
Figure 7 is a partial schematic perspective view of the LED glueboard cassette of Figure 6 being inserted into a body section of the flying pest trap of Figures 4 and/or 5; and
Figure 8 is a graph of light output from LED and fluorescent light sources respectively.

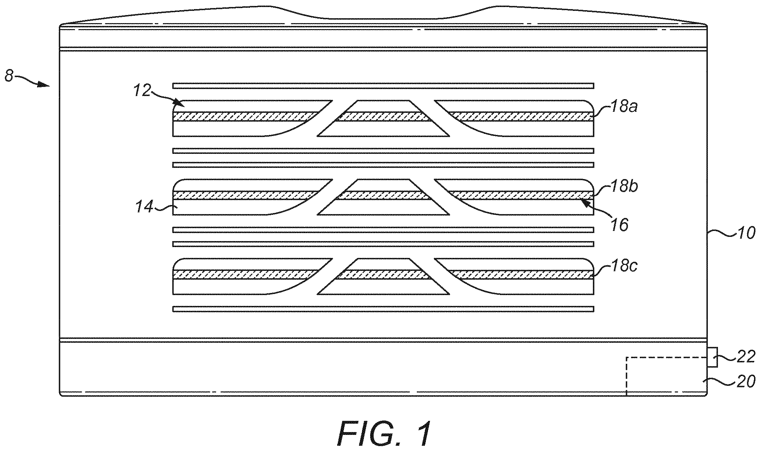

Existing pest traps for flying pests, an example of which is a pest trap 8 as shown in Figure 1 comprise a body 10, an immobilisation section 12 that includes a glueboard 14 and an attraction section 16 that includes one or more light sources 18a,b,c, which typically are chosen to output at least partly in the UV spectrum to attract pests, such as flies and moths. The pest trap 8 includes a power section 20 that receives power from an external source and provides power to the attraction section 16.

Effective pest traps combine both direct and reflected UV irradiance, to maximise output and attract flying insects. The UV is emitted directly to the environment from the light sources 18a-c and also UV from the light sources 18a-c that hits the glueboard 14 for example is reflected by the glueboard and then outwards to the environment.

Effective pest traps position the light sources 18a-c as close as possible to the immobilisation section 12, especially the glueboard 14. If parts of the glueboard 14 are too far away from the light sources 18a-c, they will not catch insects, or the effectiveness will be substantially reduced.

Light sources 18a-c are typically UV fluorescent tubes that sit in front of the glueboard 14, ensuring as much of the glueboard 14 as possible is 'useful' for catching flies or other flying pests.

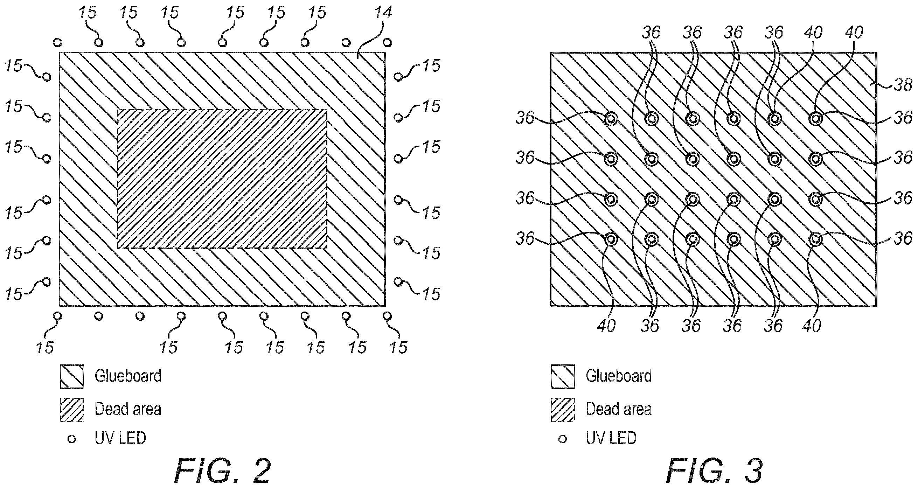

If LEDs are used as an attraction section 16 UV source, then due to their wiring requirements, they cannot sit in front of the glueboard 14, because the typical point source of an LED cannot replicate the 360 degree illumination of a fluorescent tube. As a result, typically, LEDs 15 are positioned around a perimeter of the glueboard 14, as shown in Figure 2.

There is a disadvantage of this arrangement, because it results in a significant 'dead' area towards the centre of the glueboard 14 at which there is no illumination from the LEDs 15, as shown in Figure 2.

Figure 3 shows a configuration of UV-emitting LEDs 36 according to an embodiment of the invention. The LEDs 36 are arranged in a pattern that may be evenly spread 'behind' a glueboard 38, with appropriate apertures 40 cut into the glueboard to allow light-emitting parts of the LEDs 36 to allow UV irradiance to get to the front face of the glueboard 38. Only some apertures 40 are given reference numerals to assist clarity. Each LED 36 is associated with an aperture 40.Therefore, the use of at least one LED 36 protruding through the glueboard 38 offers advantages in light spread.

The arrangement in Figure 3 reduces and/or removes 'dead areas' in the illumination spread from the LED light sources 36 on the glueboard 38. The spread of light is shown in Figure 3 to be much more even by the lack of dead spots in the light spread that is emitted by the LEDs 36.

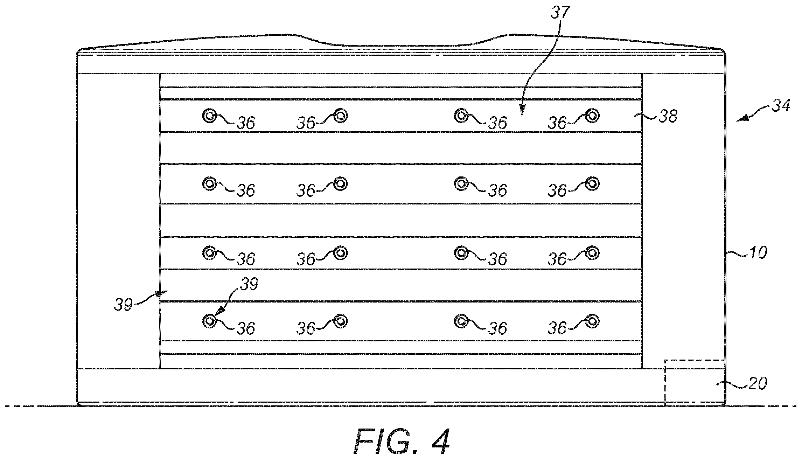

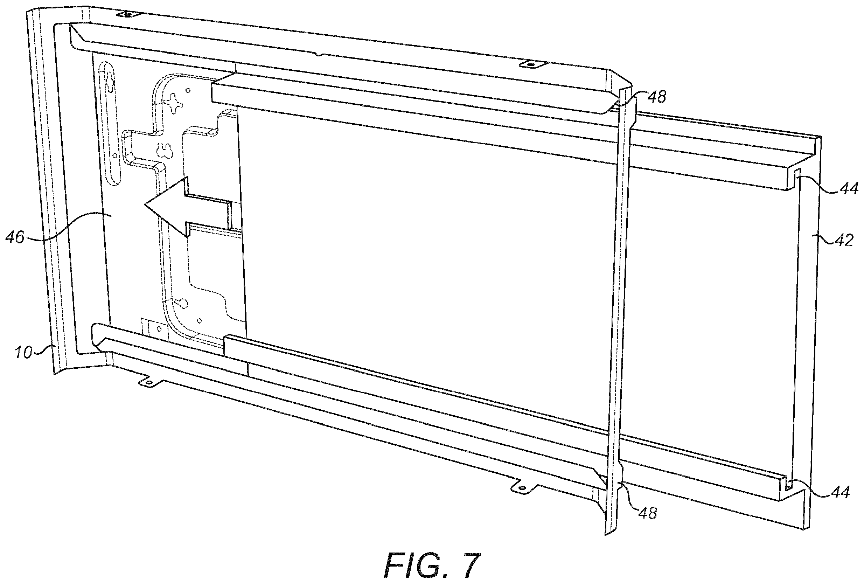

Figure 4 shows a flying pest trap 34 that incorporates the glueboard 38 shown in Figure 3 as part of an immobilisation section 37. The flying pest trap 34 includes a body 10 and a power section 20, similar in functionality to those shown in Figure 1. The body 10 includes rails (see Figure 7) in which a glueboard is typically received. Light sources 36 of an attraction section 39 are LEDs 36 arranged in a grid pattern on the glueboard 38 that forms an immobilisation section of the flying pest trap 34.

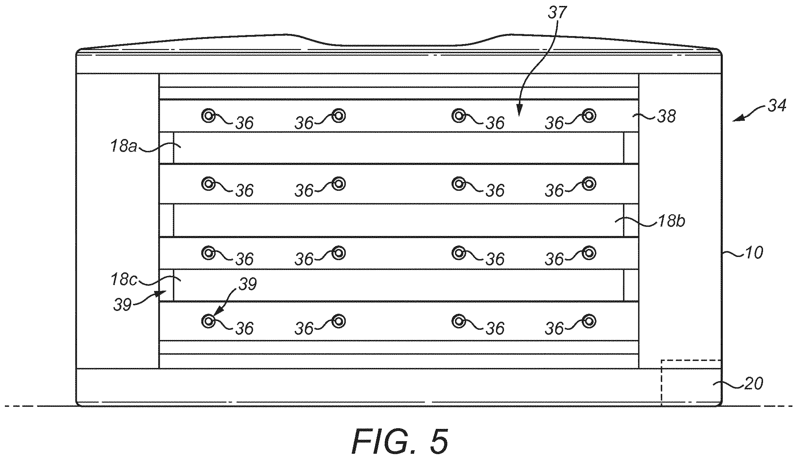

Figure 5 shows an alternative construction to that in Figure 4 and includes fluorescent light sources 18a-c in addition to the LED light sources. The addition of fluorescent light sources 18a-c provides improvements in light spread when combined with the LEDs 36.

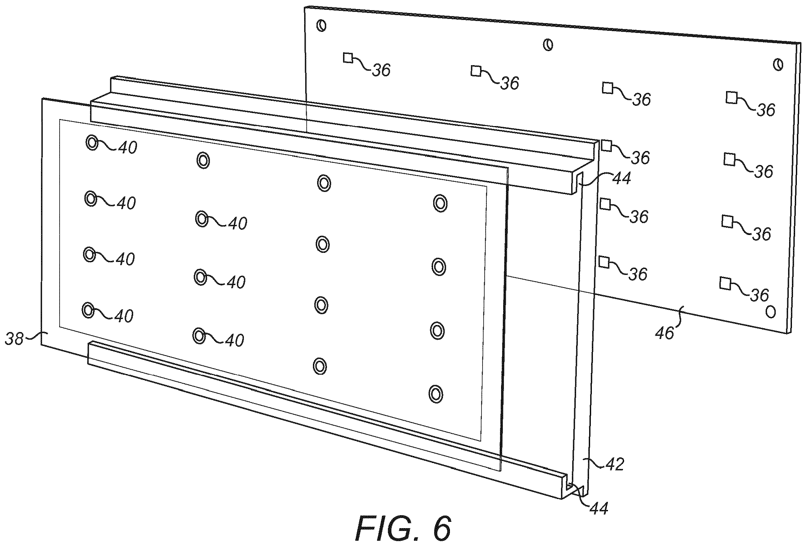

Figure 6 shows how the glueboard 38 for either of the pest traps shown in Figures 4 and 5 has apertures 40 and is received in a carrier 42 that includes slots 44 to allow the glueboard 38 to be slid into the carrier 42. The carrier 42 is made of a translucent material, because the LEDs 36 are located on a printed circuit board (PCB) 46 that sits behind the glueboard 38 and is secured to a rear of the carrier 42.

Figure 7 shows how the PCB 46, glueboard 38 and carrier 42 are inserted into runner grooves or rails 48 in a rear section of the body 10. The runner grooves are the same as those typically used in a prior art immobilisation section 12 to receive a prior art standard glueboard 14, like that shown in Figure 1. Thus there is advantageous use of an existing body 10 to implement the embodiment described herein. The PCB 46 is electrically connected to the power section to receive an electrical supply to power the LEDs 36.

In use, the evenly spread LEDs 36 provide an even spread of UV light for attracting flying pests to the immobilisation section for immobilisation on the glueboard 38. The glueboard then has a longer life, because the space on the glueboard is used more evenly and there is a reduced likelihood of sections of the glueboard becoming overloaded with trapped pests.

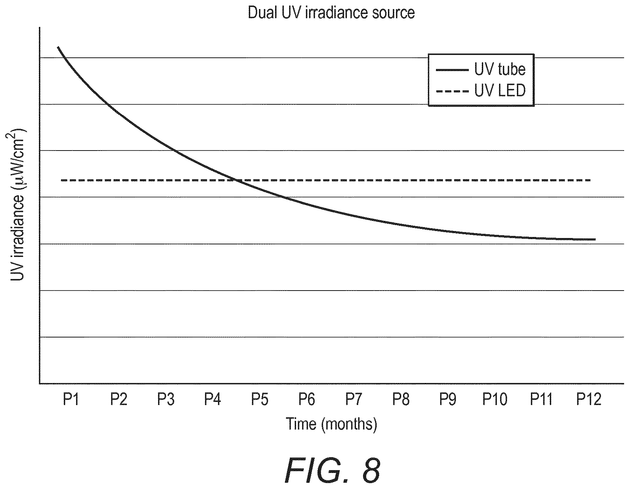

The use of LEDs 36 is also advantageous because there is no fade in light output over time with LEDs 36 compared to fluorescent tubes 18a-c, as shown in the graph of Figure 8 from which it can be seen that over a period of 12 months or so light output from a fluorescent tube may reduce by 25% or more, whereas no reduction is experienced with LEDs. The light output of fluorescent tubes 18a-c reduces significantly over time, which reduces the attractive power of the attraction section over time.

## Claims

1. A flying pest trap (34) comprising an attraction section, an immobilisation section, a body section (10) adapted to retain the attraction section and the immobilisation section, and a power section (20) adapted to provide power to the attraction section, wherein the immobilisation section includes a glue board (38);
**characterised in that** the attraction section includes a plurality of LED light sources (36) located behind openings (40) in the glue board (38), the LED light sources (36) being arranged in an array behind the glue board (38), wherein the openings (40) in the glue board (38) allow light-emitting parts of the LED light sources (36) to allow UV irradiance to get to a front face of the glue board (38).

2. A flying pest trap (34) according to claim 1, wherein the light sources (36) are UV light sources.

3. A flying pest trap (34) according to claim 1 or claim 2, wherein the plurality of LED light sources (36) are carried on a printed circuit board (46).

4. A flying pest trap according to any preceding claim, wherein each LED (36) is associated with an opening (40) in the glueboard (38).

5. A flying pest trap (34) according to any preceding claim, wherein the immobilisation section includes a carrier (42) adapted to receive the glueboard (38).

6. A flying pest trap (34) according to claim 5, wherein the carrier (42) is translucent.

7. A flying pest trap (34) according to any preceding claim, wherein the attraction section includes at least one light source (18a-c) located forwards of the immobilisation section.

## Patentansprüche

1. Flugschädlingsfalle (34), umfassend einen Anziehungsabschnitt, einen Immobilisierungsabschnitt, einen Gehäuseabschnitt (10), der dazu angepasst ist, den Anziehungsabschnitt und den Immobilisierungsabschnitt aufzunehmen, und einen Energieabschnitt (20), der dazu angepasst ist, den Anziehungsabschnitt mit Energie zu versorgen, wobei der Immobilisierungsabschnitt eine Klebeplatte (38) zu enthalten;
**dadurch gekennzeichnet, dass** der Anziehungsabschnitt eine Vielzahl von LED-Lichtquellen (36) enthält, die sich hinter Öffnungen (40) in der Klebeplatte (38) befinden, wobei die LED-Lichtquellen (36) in einem Feld hinter der Klebeplatte (38) angeordnet sind, wobei die Öffnungen (40) in der Klebeplatte (38) es den lichtemittierenden Teilen der LED-Lichtquellen (36) ermöglichen, UV-Strahlung zu einer Vorderseite der Klebeplatte (38) gelangen zu lassen.

2. Flugschädlingsfalle (34) gemäß Anspruch 1, wobei die Lichtquellen (36) UV-Lichtquellen sind.

3. Flugschädlingsfalle (34) gemäß Anspruch 1 oder Anspruch 2, wobei die Vielzahl von LED-Lichtquellen (36) auf einer Leiterplatte (46) getragen werden.

4. Flugschädlingsfalle gemäß einem der vorhergehenden Ansprüche, wobei jede LED (36) einer Öffnung (40) in der Klebeplatte (38) zugeordnet ist.

5. Flugschädlingsfalle (34) gemäß einem der vorhergehenden Ansprüche, wobei der Immobilisierungsabschnitt einen Träger (42) umfasst, der zum Aufnehmen der Klebeplatte (38) angepasst ist.

6. Flugschädlingsfalle (34) gemäß Anspruch 5, wobei der Träger (42) transluzent ist.

7. Flugschädlingsfalle (34) gemäß einem der vorhergehenden Ansprüche, wobei der Anziehungsabschnitt mindestens eine Lichtquelle (18a-c) enthält, die sich vor dem Immobilisierungsabschnitt befindet.

## Revendications

1. Piège à nuisibles volants (34), comprenant une section d'attraction, une section d'immobilisation, une section de corps (10) adaptée pour retenir la section d'attraction et la section d'immobilisation, et une section électrique (20) adaptée pour fournir de l'électricité à la section d'attraction, dans lequel la section d'immobilisation inclut un panneau à colle (38) ;
**caractérisé en ce que** la section d'attraction inclut une pluralité de sources de lumière à LED (36) situées derrière des ouvertures (40) dans le panneau à colle (38), les sources de lumière à LED (36) étant agencées en un réseau derrière le panneau à colle (38), dans lequel les ouvertures (40) dans le panneau à colle (38) permettent à des parties luminescentes des sources de lumière à LED (36) de permettre à une irradiance UV d'atteindre une face avant du panneau à colle (38).

2. Piège à nuisibles volants (34) selon la revendication 1, dans lequel les sources de lumière (36) sont des sources de lumière UV.

3. Piège à nuisibles volants (34) selon la revendication 1 ou la revendication 2, dans lequel la pluralité de sources de lumière à LED (36) sont supportées sur une carte de circuit imprimé (46).

4. Piège à nuisibles volants selon une quelconque revendication précédente, dans lequel chaque LED (36) est associée à une ouverture (40) dans le panneau à colle (38).

5. Piège à nuisibles volants (34) selon une quelconque revendication précédente, dans lequel la section d'immobilisation inclut un support (42) adapté pour recevoir le panneau à colle (38).

6. Piège à nuisibles volants (34) selon la revendication 5, dans lequel le support (42) est translucide.

7. Piège à nuisibles volants (34) selon une quelconque revendication précédente, dans lequel la section d'attraction inclut au moins une source de lumière (18a-c) située en avant de la section d'immobilisation.
